# FASCICULE DE BREVET EUROPEEN

(11) **EP 1 279 172 B1**
(45) Date de publication et mention de la délivrance du brevet: **02.08.2006**
(21) Numéro de dépôt: 01919596.5
(22) Date de dépôt: 29.03.2001
(51) Int. Cl.: G21C 19/20

(54) **PROCEDE ET DISPOSITIF DE CHARGEMENT DU COEUR D'UN REACTEUR NUCLEAIRE AVEC DES ASSEMBLAGES DE COMBUSTIBLE**
VERFAHREN UND VORRICHTUNG ZUM BELADEN EINER KERNREAKTORSPALTZONE MIT BRENNSTABBÜNDELN
METHOD AND DEVICE FOR LOADING THE CORE OF A NUCLEAR REACTOR WITH FUEL ASSEMBLIES

(30) Priorité: 04.05.2000 FR 0005729
(43) Date de publication de la demande: 29.01.2003
(73) Titulaire: Framatome ANP, 92080 Paris La Defense (FR)
(72) Inventeur: JOLY, Philippe, F-78750 Mareil Marly (FR); JUBLOT, Patrice, F-92600 Asnières (FR); HAZELARD, Claude, F-95430 Auvers sur Oise (FR)
(74) Mandataire: Bouget, Lucien
(86) Numéro de dépôt international: PCT/FR2001/000954
(87) Numéro de publication internationale: WO 2001/084557

(56) Documents cités:
- EP-A- 0 220 117
- EP-A- 0 620 561
- FR-A- 2 614 128
- FR-A- 2 652 942
- US-A- 4 676 945
- US-A- 5 737 377
- US-A- 5 898 745
- PATENT ABSTRACTS OF JAPAN vol. 1995, no. 02, 31 mars 1995 (1995-03-31) & JP 06 324187 A (FUJI ELECTRIC CO LTD), 25 novembre 1994 (1994-11-25)

## Description

L'invention concerne un procédé et un dispositif de chargement du coeur d'un réacteur nucléaire refroidi par de l'eau et en particulier d'un réacteur nucléaire refroidi par de l'eau sous pression.

Les réacteurs nucléaires à eau sous pression comportent, à l'intérieur d'une cuve, un coeur constitué par des assemblages de combustible de forme prismatique droite à section carrée disposés avec leurs axes verticaux suivant toute la hauteur du coeur, juxtaposés suivant leurs faces latérales. Chacun des assemblages de combustible comporte un embout inférieur destiné à venir reposer sur une plaque de support du coeur horizontale disposée transversalement dans la cuve du réacteur nucléaire et traversée par des ouvertures de passage d'eau de refroidissement du réacteur. La plaque de support de coeur comporte des ouvertures de passage d'eau et des moyens de positionnement d'un assemblage de combustible, au niveau de chacune des positions d'assemblage de combustible du coeur, ces positions d'assemblage de combustible constituant un réseau à maille carrée suivant la surface d'appui de la plaque de support du coeur. Les moyens de positionnement de chacun des assemblages de combustible sur la plaque de support du coeur sont généralement constitués par des pions en saillie par rapport à la face supérieure de la plaque de support destinés à être engagés dans des ouvertures de l'embout inférieur des assemblages de combustible pour assurer leur mise en place en des emplacements bien déterminés sur la plaque de support.

Le chargement du coeur du réacteur nucléaire est réalisé depuis le niveau supérieur d'une piscine du réacteur dans laquelle débouche une partie supérieure de la cuve du réacteur nucléaire qui est alors ouverte et remplie d'eau. On réalise le chargement du coeur par déplacement, dans la direction verticale et vers le bas, de chacun des assemblages de combustible du coeur successivement, de manière à déposer l'assemblage de combustible sur la plaque de support du coeur par l'intermédiaire de son embout inférieur dans une position bien définie dans laquelle deux pions en saillie de la plaque de support de coeur s'engagent dans l'embout inférieur de l'assemblage de combustible. La position de chargement de l'assemblage de combustible à l'intérieur du coeur est par exemple délimitée sur deux côtés latéraux adjacents par deux surfaces limitatives sensiblement continues sur toute la hauteur du coeur, perpendiculaires entre elles, qui sont constituées soit par deux faces d'assemblages de combustible voisins de l'assemblage dont on assure le chargement, soit par deux côtés perpendiculaires d'un cloisonnement disposé dans la cuve du réacteur nucléaire, à la périphérie du coeur.

Un des problèmes à résoudre, pour réaliser le chargement du coeur d'un réacteur nucléaire dans des conditions satisfaisantes, est relatif au guidage des assemblages de combustible pour assurer leur dépose et leur positionnement sur la plaque de support du coeur, à la fin du déplacement vertical utilisant la machine de chargement. Il est en effet nécessaire de diriger parfaitement l'embout inférieur de l'assemblage de combustible dans la phase finale de la descente de l'assemblage, pour pouvoir engager les ouvertures de l'embout inférieur sur les pions en saillie de la plaque de support du coeur assurant le positionnement de l'assemblage de combustible dans le coeur.

Les assemblages de combustible qui sont rechargés dans le coeur du réacteur nucléaire sont constitués, pour partie, par des assemblages usagés qui ont séjourné dans le réacteur nucléaire pendant des cycles de fonctionnement d'une durée totale de plusieurs mois ou plusieurs années. Ces assemblages peuvent avoir été déformés sous irradiation à l'intérieur du coeur du réacteur nucléaire, si bien qu'ils peuvent présenter, par exemple, des défauts de rectitude dans leur direction axiale. Il en résulte des difficultés accrues pour engager les ouvertures de l'embout inférieur de l'assemblage de combustible sur les pions en saillie de la plaque de support du coeur.

On a donc proposé d'utiliser des outils guidant l'embout inférieur ou pied de l'assemblage de combustible, lors de sa dépose sur la plaque inférieure de coeur.

On a par exemple proposé, dans le FR-2.588.689, un patin de guidage porté par le mât de la machine de chargement du réacteur nucléaire qui assure le guidage du pied de l'assemblage de combustible au moment de sa dépose.

On propose également dans ce document différentes variantes des moyens de guidage qui peuvent être mis en place par la machine de chargement sur la plaque de support du coeur. Ces dispositifs de guidage s'étendent sur une hauteur importante au-dessus de la plaque de support du coeur, éventuellement sur toute la hauteur du coeur, et leur manipulation par la machine de chargement est une opération complexe qui se traduit par des périodes d'indisponibilité de la machine de chargement pour la manutention des assemblages de combustible.

Dans le FR-2.652.942, on a proposé un outil d'aide au chargement comportant des pavés positionneurs et un porteur équipé de moyens de déplacement autonomes lui permettant de se mouvoir sur la plaque inférieure de coeur. Le guidage à distance de l'outil n'est pas aisé et la récupération de l'outil peut poser des problèmes. De plus, la mécanique est complexe et les opérations de maintenance doivent être effectuées sur un dispositif contaminé.

En outre, le chargement d'un réacteur nucléaire doit s'effectuer aussi rapidement que possible car les périodes de chargement se situent sur le chemin critique de l'opération d'arrêt du réacteur nucléaire pour rechargement, entretien et réparation. Tout gain de temps obtenu sur l'opération de chargement du coeur diminue donc le temps d'immobilisation de la centrale nucléaire et permet de réaliser des économies importantes. Dans le cas de la mise en oeuvre de dispositifs de guidage nécessitant l'utilisation de la machine de chargement, comme décrit par exemple dans le FR-2.588.689, la vitesse d'utilisation et la productivité de la machine de chargement sont considérablement réduites.

D'autre part, l'utilisation d'un patin de guidage accompagnant la machine de chargement ne fournit pas un guidage aussi précis que des dispositifs placés sur la plaque de support de coeur. La mise en place de dispositifs de guidage sur la plaque de support du coeur par la machine de chargement réduit également la disponibilité et donc la productivité de la machine de chargement, pour le chargement d'assemblages de combustible dans le coeur.

Le but de l'invention est donc de proposer un procédé de chargement du coeur d'un réacteur nucléaire refroidi par de l'eau avec des assemblages de combustible de forme prismatique droite à section carrée disposés avec leurs axes verticaux suivant toute la hauteur du coeur, juxtaposés suivant leurs faces latérales et comportant chacun un embout inférieur ayant quatre faces latérales destiné à venir reposer sur une plaque de support du coeur horizontale traversée par des ouvertures de passage d'eau de refroidissement et comportant des moyens de positionnement d'un assemblage de combustible, en regard de chacune d'un ensemble de positions d'assemblage de combustible du coeur, le chargement étant réalisé depuis le niveau supérieur d'une piscine du réacteur dans laquelle débouche une partie supérieure d'une cuve du réacteur nucléaire renfermant le coeur du réacteur, ouverte et remplie d'eau, par déplacement, dans la direction verticale et vers le bas, au moyen d'une machine de chargement, de chacun des assemblages de combustible du coeur en position verticale, successivement, pour placer chaque assemblage de combustible dans une position d'assemblage à l'intérieur du coeur ayant un axe vertical de positionnement de l'assemblage et délimitée par au moins une surface limitative s'étendant sensiblement sur toute la hauteur du coeur, ce procédé de chargement permettant d'améliorer la précision et la rapidité du chargement des assemblages de combustible dans le coeur et donc de limiter la durée totale nécessaire pour le chargement d'un coeur de réacteur nucléaire.

Dans ce but :
- on met en place, avant le chargement d'un assemblage de combustible, dans au moins une position d'assemblage adjacente à la position de l'assemblage dont on effectue le chargement, au moins un moyen de guidage de l'embout inférieur de l'assemblage de combustible, de manière à guider l'embout inférieur suivant ses quatre faces latérales pour le déposer sur la plaque de support de coeur, le moyen de guidage ayant une hauteur inférieure à 5% de la hauteur du coeur, au-dessus de la plaque de support du coeur et étant engagé dans des ouvertures de passage d'eau pour son positionnement et son immobilisation,
- on déplace l'assemblage de combustible vers le bas suivant un axe vertical décalé dans une direction parallèle à la plaque de support du coeur par rapport à l'axe vertical de positionnement de l'assemblage de combustible dans le coeur, de manière à le maintenir éloigné de l'au moins une surface limitative pendant le déplacement,
- on arrête le déplacement vertical à la première vitesse de l'assemblage de combustible au plus tard lorsque l'embout inférieur de l'assemblage de combustible est parvenu à une distance verticale de la plaque de support de coeur égale à 5 % de la hauteur du coeur,
- on déplace l'assemblage de combustible sensiblement horizontalement pour placer son axe suivant l'axe de positionnement de l'assemblage dans le coeur du réacteur, et
- on déplace l'assemblage de combustible, dans la direction verticale et vers le bas, à une seconde vitesse inférieure à la première, pour le déposer sur la plaque de support de coeur, l'embout inférieur de l'assemblage de combustible étant alors guidé sur ses quatre faces latérales.

Afin de bien faire comprendre l'invention, on va décrire, en se référant aux figures jointes en annexe, un mode de réalisation d'un dispositif de chargement du coeur d'un réacteur nucléaire et sa mise en oeuvre dans un procédé de chargement suivant l'invention.

La figure 1 est une vue en élévation et en coupe de l'ensemble du dispositif de chargement et de moyens de mise en place de moyens de guidage d'un assemblage de combustible, suivant un premier mode de réalisation.

Les figures 2, 3 et 4 sont des vues, respectivement, en élévation, en coupe verticale et de dessus d'un moyen de guidage pour la mise en oeuvre du procédé de l'invention.

Les figures 5 et 6 sont des vues en coupe d'un dispositif permettant de mettre en place les moyens de guidage sur la plaque de support du coeur, dans une première et dans une seconde positions fonctionnelles.

La figure 7 est une vue en plan du réseau de positions d'assemblages du coeur d'un réacteur nucléaire en cours de chargement.

La figure 8 est une vue en élévation et en coupe partielle d'un dispositif de mise en place de moyens de guidage d'un assemblage de combustible pour la mise en oeuvre du procédé suivant l'invention, suivant un second mode de réalisation.

La figure 9 est une vue de dessus du dispositif de mise en place représenté sur la figure 8 et de la machine de chargement du réacteur nucléaire.

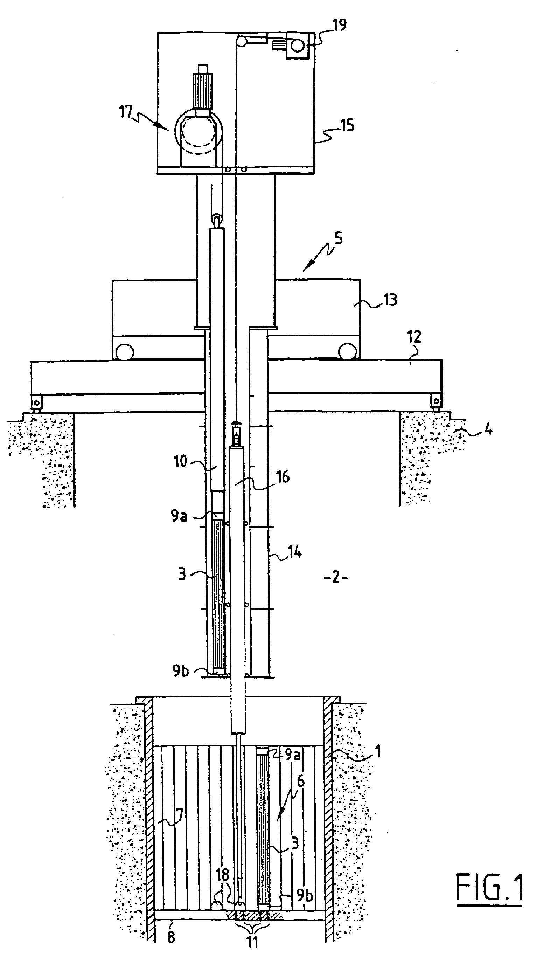

Sur la figure 1, on a représenté, de manière schématique, la partie supérieure de la cuve 1 d'un réacteur nucléaire, pendant une opération de chargement du coeur du réacteur par des assemblages de combustible 3.

La cuve 1 est ouverte à sa partie supérieure en communication avec une piscine 2 du réacteur nucléaire délimitée par des parois en béton à l'intérieur du bâtiment du réacteur.

Pendant l'opération de rechargement du coeur du réacteur nucléaire à l'intérieur de la cuve 1, la piscine 2 et la cuve 1 sont remplies d'eau. Sur la figure 1, on a représenté la partie supérieure de parois 4 en béton de la piscine qui porte des rails sur lesquels se déplace la machine de chargement 5 du réacteur nucléaire.

A l'intérieur de la cuve 1, l'espace occupé par le coeur 6 du réacteur nucléaire est délimité par un cloisonnement périphérique 7 et, à sa partie inférieure, par la plaque de support du coeur 8 sur laquelle sont déposés les assemblages de combustible 3 constituant le coeur 6.

Les assemblages de combustible 3 sont constitués chacun par un faisceau de crayons de combustible maintenus dans une ossature dont les parties d'extrémité, respectivement supérieure et inférieure, sont constituées par un embout supérieur 9a et par un embout inférieur 9b. Chacun des assemblages de combustible du coeur repose sur la plaque de support du coeur 8, par l'intermédiaire de son embout inférieur 9b. Le positionnement de l'assemblage de combustible sur la plaque de support du coeur 8 est assuré par des pions en saillie sur la face supérieure de la plaque de support 8 venant s'engager dans des ouvertures des parties d'angle de l'embout inférieur 9b de forme sensiblement carrée.

De plus, la plaque de support du coeur 8 est traversée par des ouvertures de passage d'eau 11 assurant le passage de l'eau de refroidissement du réacteur circulant dans la direction verticale et de bas en haut suivant la direction axiale des assemblages de combustible 3 du coeur 6.

Au droit de chacune des positions d'assemblages de combustible 3 du coeur 6, la plaque de support du coeur 8 est traversée par quatre ouvertures 11 de passage d'eau et comporte deux pions de positionnement d'assemblages de combustible.

Pour réaliser le chargement du coeur 6 du réacteur nucléaire, chacun des assemblages de combustible 3 destinés à constituer le coeur 6 est pris en charge par la machine de chargement 5, dans une disposition verticale et descendu suivant un axe de déplacement vertical, à l'intérieur de la cuve 1, par la machine de chargement, jusqu'à la dépose de l'assemblage de combustible par l'intermédiaire de son embout inférieur 9b sur la plaque de support de coeur 8, dans un emplacement d'assemblage de combustible parfaitement déterminé.

La machine de chargement 5 comporte un pont roulant 12 se déplaçant sur des rails solidaires de la partie supérieure des parois 4 de la piscine 2 du réacteur, dans une première direction (perpendiculaire au plan de la figure 1).

Le pont roulant 5 comporte de plus un chariot 13 qui est monté mobile sur la surface supérieure des poutres du pont 12 de direction transversale, dans une direction perpendiculaire à la direction de déplacement du pont roulant 12. Le chariot 13 porte un tube de guidage 14 d'axe vertical s'étendant en-dessous du chariot 13 entre les poutres transversales du pont roulant 12 et une tour 15 s'étendant verticalement au-dessus du chariot 13.

A l'intérieur du tube de guidage 14, sont montés mobiles, dans la direction verticale, le mât de chargement 10 des assemblage de combustible et une perche 16 d'un dispositif de mise en place sur la plaque de support du coeur 8 de dispositifs 18 de guidage de l'embout inférieur 9b ou pied des assemblages de combustible.

Le mât de chargement 10 comporte une partie interne mobile dont l'extrémité inférieure comporte des moyens de préhension de l'assemblage de combustible 3, par l'intermédiaire de son embout supérieur 9a.

Le mât de chargement 10 est suspendu, par l'intermédiaire d'une poulie, au câble de levage d'un treuil de levage 17 disposé dans la tour 15 de la machine de chargement.

La perche 16 du moyen de mise en place des dispositifs de guidage 18 est suspendue au câble d'un treuil de levage 19 passant sur une poulie de suspension montée à la partie supérieure de la tour 15.

Le déplacement à mouvements croisés du pont roulant 12 et du chariot 13 de la machine de chargement 5 permet de placer l'axe du mât de chargement 10 d'un assemblage de combustible 3 de forme prismatique à section carrée à l'aplomb d'une position quelconque d'assemblages de combustible dans le coeur 6 du réacteur présentant un axe vertical de positionnement de l'assemblage et de placer également l'axe vertical de la perche 16 à la verticale d'une position quelconque d'assemblage de combustible dans le coeur 6, cette position constituant une position adjacente de la position de dépose de l'assemblage de combustible 3.

Il est à remarquer que les déplacements verticaux du mât de chargement 10 et de la perche 16 peuvent être réalisés de manière indépendante les uns des autres.

Sur la figure 1, le mât de chargement 10 a été représenté dans une position relevée dans laquelle il est entièrement rétracté à l'intérieur du tube de guidage 14 de la machine de chargement et la perche 16 dans une position extraite de dépose d'un moyen de guidage 18. Les treuils 17 et 19 permettent de déplacer le mât de chargement 10 et la perche 16 dans leur direction axiale verticale entre leur position rétractée et une position basse de dépose d'un assemblage de combustible ou d'un moyen de guidage 18, respectivement, sur la plaque de support de coeur 8.

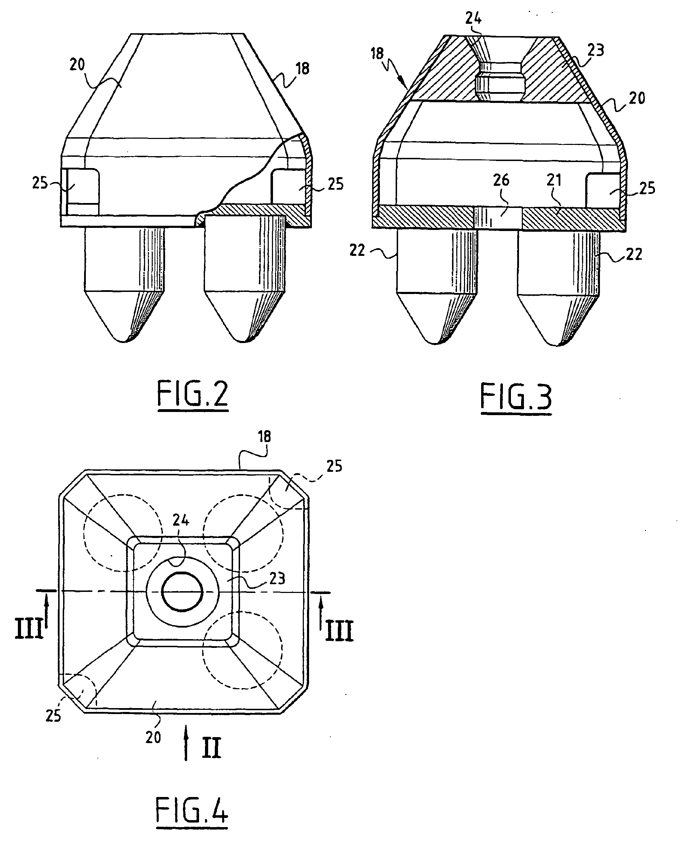

Sur les figures 2 à 4, on a représenté un.moyen de guidage 18 qui peut être mis en place sur la plaque de support de coeur 8, par la perche 16, pour assurer le guidage du pied 9b d'un assemblage de combustible à la fin de son déplacement vertical et vers le bas pour sa dépose sur la plaque de support de coeur 8.

Le moyen de guidage 18 comporte une enveloppe 20 de forme globalement pyramidale ayant une base carrée prolongée par une jupe parallélépipédique de raccordement à une plaque de base carrée 21. La plaque de base 21 présente la forme et les dimensions d'une section carrée d'un assemblage de combustible 3.

Sur la base carrée 21, en saillie vers le bas, sont fixés deux, trois ou quatre pions de positionnement et d'immobilisation 22 dont le diamètre est légèrement inférieur au diamètre des ouvertures d'eau 11 traversant la plaque de support de coeur 8 au niveau de chacune des positions d'assemblages de combustible. De plus, les pions 22 sont placés de manière à pouvoir s'engager dans les ouvertures de la plaque de support de coeur 4 présentes dans chacune des positions d'assemblages de combustible du coeur 6.

Le moyen de guidage 18 comporte de plus, fixée à l'intérieur de l'enveloppe 20, à son extrémité supérieure, une pièce de préhension et de levage 23 traversée par une ouverture profilée 24. Enfin, suivant deux angles disposés aux extrémités d'une diagonale de la base 21, la plaque de base 21 et l'enveloppe 20 sont traversées par des ouvertures verticales 25 d'engagement de deux pions en saillie de la plaque de support de coeur 8 disposés dans un emplacement d'assemblage de combustible.

La plaque de base 21 est traversée, à sa partie centrale, par une ouverture 26 pour le passage des guidages des doigts de gant de l'instrumentation du coeur.

Les moyens 18 de guidage des embouts supérieurs d'assemblages de combustible sont destinés à être mis en place sur la plaque de support de coeur dans un emplacement d'assemblage de combustible. Le moyen 18 est orienté de manière que les pions 22 soient introduits pratiquement sans jeu dans les ouvertures de passage d'eau de la plaque de support de coeur assurant ainsi le centrage et le positionnement du moyen de guidage 18 sur la plaque de support de coeur.

De plus, deux pions en saillie par rapport à la face supérieure de la plaque de support de coeur sont engagés dans les ouvertures 25 dans les angles de la plaque de base 21 et de la jupe de l'enveloppe 20.

Lorsque le moyen de guidage 18 est placé dans une position d'assemblage de combustible, les quatre faces inclinées de l'enveloppe 20 de forme pyramidale sont dirigées vers quatre emplacements d'assemblage de combustible adjacents à l'emplacement sur lequel est disposé le moyen de guidage 18. Les surfaces extérieures inclinées des faces de l'enveloppe 20 de forme pyramidale sont donc susceptibles d'assurer le guidage d'un assemblage de combustible dans quatre emplacements voisins du moyen de guidage.

Lorsqu'un embout inférieur d'assemblages de combustible vient en contact avec l'une des surfaces externes inclinées de l'enveloppe pyramidale du moyen de guidage 18, cette surface exerce sur l'embout inférieur de l'assemblage de combustible un effet de guidage dans la direction verticale et dans une direction horizontale, du fait de l'inclinaison de la surface de guidage. Ces effets de guidage peuvent être optimisés en jouant sur l'angle d'inclinaison des surfaces de l'enveloppe pyramidale.

L'ouverture 24 usinée dans la pièce de préhension et de levage 23 du moyen de guidage 18 présente une partie d'entrée évasée puis un col resserré et enfin une partie élargie par rapport au col. Une telle forme d'ouverture est une forme classique dans le cas de pièces dont on assure le levage dans une centrale nucléaire en utilisant un moyen de levage à doigts de préhension manoeuvrables, telles que des grappes de commande de la réactivité du coeur.

Le moyen de guidage 18 peut être pris en charge et déplacé par une perche telle que la perche 16 comportant un organe de prise à doigts de préhension manoeuvrables.

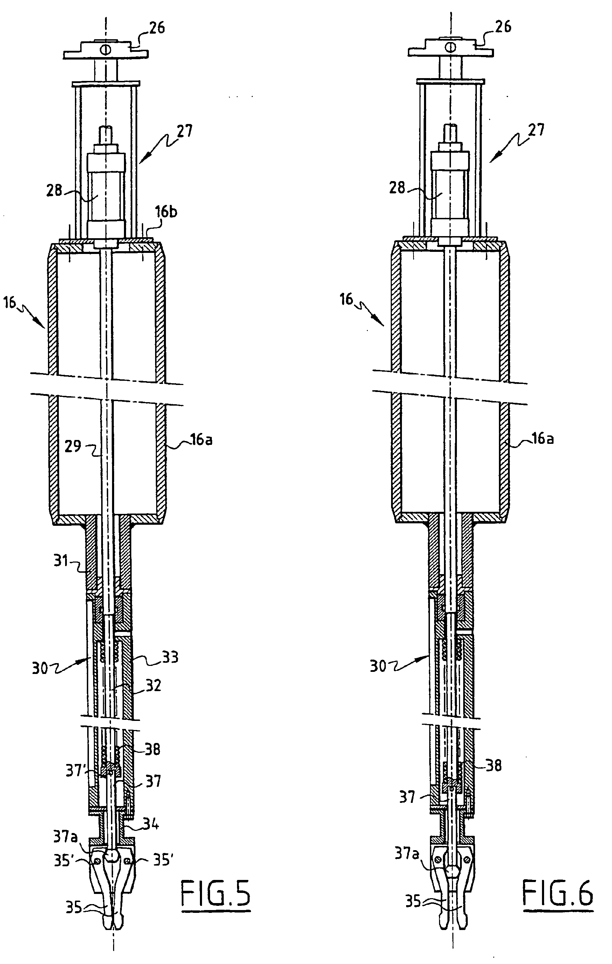

Sur les figures 5 et 6, on a représenté la perche 16 qui comporte un corps tubulaire 16a suspendu par l'intermédiaire d'une tête de suspension 27 sur laquelle est fixé un palonnier 26, au câble de levage du treuil 19.

La tête de suspension 27 est fixée sur la partie supérieure du corps 16a sur laquelle est fixé, au niveau d'une ouverture traversante de direction axiale, le corps d'un vérin 28 disposé axialement dans la tête de levage 27 et prolongé axialement par un élément tubulaire allongé 29 monté coaxialement à l'intérieur de l'élément tubulaire 16a. Un élément tubulaire 31 dans le prolongement axial de l'élément 16a porte, à son extrémité inférieure, un ensemble de préhension 30 manoeuvrable par l'intermédiaire de la tige 32 du vérin 28, comportant un support tubulaire 33.

L'ensemble de préhension 30 comprend un porte-pince 34 solidaire du support tubulaire 33 sur lequel sont montés, pivotants autour d'axes 35', deux doigts de préhension 35 analogues à des doigts de préhension d'une grappe de commande du réacteur nucléaire.

A l'intérieur du support tubulaire 33 est montée mobile la tige 32 du vérin 28 à la partie inférieure de laquelle est montée articulée autour d'un axe 37', dans une disposition coaxiale, la tige 37 d'une olive 37a de manoeuvre des doigts 35.

L'extrémité inférieure de la tige 32 dans le prolongement axial de laquelle est montée de manière articulée la tige 37 de l'olive 37a présente une partie élargie sur laquelle vient en appui une partie d'extrémité inférieure d'un ressort hélicoïdal de rappel 38 disposé dans un alésage de direction axiale du support tubulaire 33 et en appui par son extrémité supérieure sur un épaulement du support tubulaire 33.

Le ressort 38 est taré de manière à assurer le rappel de la tige 32 et de l'olive 37a solidaire de la tige 37 dans une position basse représentée sur la figure 6 dans laquelle l'olive 37a assure l'écartement des doigts 35.

En alimentant en fluide moteur le vérin pneumatique 28, on assure le déplacement de la tige de manoeuvre 32 et de l'olive 37a solidaire de la tige 37 vers le haut dans la direction axiale en comprimant le ressort 38, de manière que l'olive 37a, en position haute, assure le rapprochement maximal des doigts 35, comme représenté sur la figure 5.

Dans cette position rapprochée, les doigts 35 peuvent être introduits dans une ouverture de préhension telle que l'ouverture 24 d'un moyen de guidage 18 analogue à l'ouverture du pommeau d'une grappe de commande du réacteur nucléaire.

En relâchant la pression d'actionnement du vérin 28, on assure le déplacement de la tige 32, de la tige 37 et de l'olive 37a dans la direction axiale et vers le bas, sous l'effet du ressort 38 qui avait été comprimé lors du déplacement vers le haut de la tige d'actionnement 32.

L'olive 37a assure alors l'écartement des doigts, comme représenté sur la figure 6.

L'extrémité des doigts 35 vient alors se loger dans la partie élargie de l'ouverture 24, en-dessous de la partie médiane à faible diamètre, et assure l'accrochage du moyen de guidage 18 à l'extrémité de la perche 16.

On peut alors réaliser le déplacement du moyen de guidage 18 suspendu à l'extrémité de l'ensemble de préhension 30 de la perche 16. Le maintien en position accrochée du moyen de guidage 18 est assuré de manière passive par le ressort 38.

La manoeuvre de la perche 16, depuis le poste de commande de la machine de chargement 5, au-dessus du niveau supérieur de la piscine permet de placer le moyen de guidage 18 sur la plaque de support de coeur, sur un emplacement d'assemblage de combustible, les pions 22 du moyen de guidage étant introduits dans les ouvertures d'eau traversant la plaque de support de coeur au niveau de l'emplacement d'assemblage de combustible.

En actionnant le vérin 28, on peut libérer les doigts 35 de l'ouverture 24 du moyen de guidage 18 et relever la perche de manoeuvre 16 pour laisser en place le moyen de guidage à l'emplacement d'assemblage de combustible sur la plaque de support de coeur du réacteur nucléaire.

Pour effectuer ces manoeuvres, le palan de levage 19 de la perche de manoeuvre 16 comporte un moteur alternatif piloté par l'intermédiaire d'un variateur de vitesse qui permet un déplacement, dans la direction verticale, des moyens de guidage à mettre en place, à une vitesse d'environ 15 m par minute. Le palan de levage comporte de plus un frein de service intégré, un réducteur et un tambour à enroulement en acier inoxydable muni d'un frein de sécurité. La perche de manoeuvre 16 est suspendue, à l'aide de câbles en acier inoxydable et le palonnier de suspension 26 de la perche comporte un axe dynamométrique permettant d'arrêter le mouvement de la perche en cas de surcharge ou de sous-charge et lors de la dépose du moyen de guidage. En outre, au moins un codeur est associé au palan de levage de la perche, pour connaître la position exacte de l'extrémité de la perche portant le moyen de guidage 18, dans la direction verticale et pour détecter une éventuelle survitesse du palan.

Le vérin comporte deux capteurs de position permettant de repérer l'état engagé ou désengagé des doigts 35 du grappin, les signaux des capteurs de position étant transmis au poste de commande de la machine de chargement 5.

La perche de manoeuvre 16 présente en partie haute sensiblement le même encombrement qu'une perche de télévision utilisée habituellement sur les machines de chargement des réacteurs nucléaires afin de réutiliser les éléments de guidage existants d'une perche de télévision dans le tube 14, de sorte qu'on peut effectuer un échange entre la perche de télévision et la perche de manoeuvre sur le site du réacteur nucléaire.

Cependant, la partie inférieure de la perche 16 présente des dimensions sensiblement plus faibles que le corps d'une perche de télévision pour permettre l'introduction dans le coeur avec un jeu suffisant entre la perche et l'assemblage combustible.

Les moyens de contrôle et de commande de la perche de manutention 16 des moyens de guidage 18 sont intégrés au poste de commande de la machine de chargement 5.

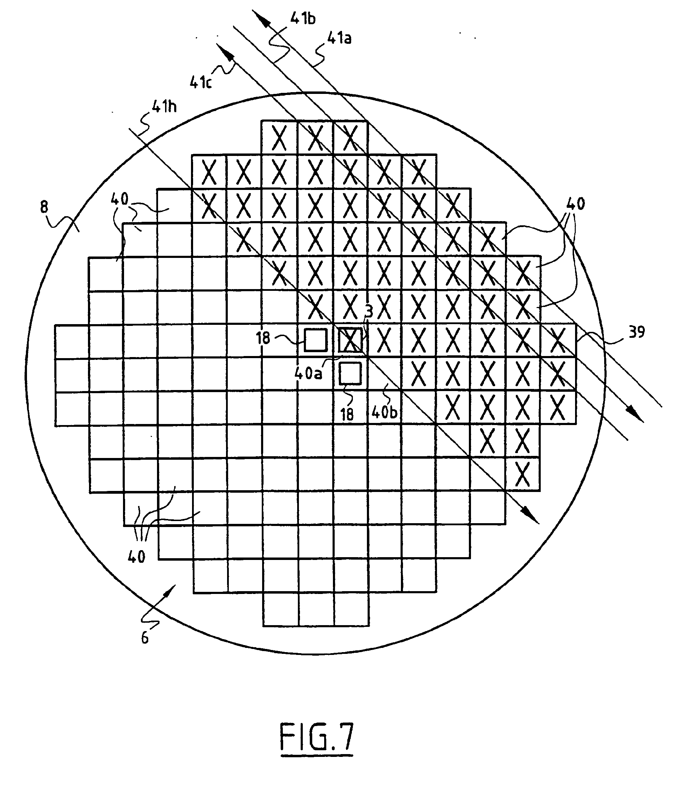

Sur la figure 7, on a représenté la surface supérieure de la plaque de support de coeur 8 du réacteur nucléaire et le coeur 6 du réacteur sous la forme d'un réseau d'emplacements à maille carrée d'assemblages de combustible 3 sur la plaque de support de coeur 8.

Le coeur 6 a été représenté de manière conventionnelle, pendant une opération de chargement, les emplacements 40 occupés par un assemblage de combustible déjà chargé dans le coeur étant indiqués par une croix et les emplacements 40 qui ne sont pas encore occupés par un assemblage de combustible ne comportant aucun signe d'identification.

Les emplacements 40 d'assemblages de combustible du coeur 6 du réacteur sont disposés suivant un réseau à maille carrée délimité extérieurement par un contour périphérique 39 correspondant à une section transversale du cloisonnement 7 délimitant le coeur 6.

Le cloisonnement 7 du coeur 6 est constitué par des plaqués verticales planes ayant sensiblement la hauteur du coeur disposées verticalement suivant le contour 39.

Les assemblages 3 situés à la périphérie du coeur sont en appui suivant une ou deux faces latérales sur des plaques du cloisonnement.

On a de plus représenté sous la forme d'un carré inscrit à l'intérieur d'un emplacement 40 et barré d'une croix un assemblage de combustible 3 en cours de chargement dans un emplacement 40 et par des carrés inscrits dans des emplacements 40 et non affectés de croix, des moyens de guidage 18 utilisés pendant le chargement de l'assemblage de combustible 3.

Comme il est visible sur la figure, le logement à l'intérieur du coeur, dans lequel on place l'assemblage de combustible 3, dont l'emplacement 40a constitue la section transversale dans le plan de la plaque de support de coeur 8, est délimité sur deux côtés adjacents par deux faces latérales d'assemblage de combustible dans des positions voisines du logement dans lequel on réalise le chargement de l'assemblage de combustible, ces faces latérales d'assemblages de combustible voisins étant perpendiculaires entre elles.

Les deux autres côtés du logement dans lequel on charge l'assemblage de combustible 3 ne sont pas occupés par des faces latérales d'assemblages de combustible.

Le chargement du coeur du réacteur nucléaire est réalisé suivant des diagonales successives et parallèles entre elles telles que 41 a, 41 b, et 41 c, de telle sorte que, lors du chargement d'un assemblage de combustible quelconque, le logement de réception de l'assemblage de combustible est toujours fermé sur deux côtés par des faces s'étendant de manière sensiblement continue sur toute la hauteur du coeur et ouvert sur ses deux autres côtés.

Dans le cas du chargement des assemblages 3 suivant la diagonale 41 a, chacun des logements de chargement d'un assemblage de combustible est délimité sur deux côtés par deux faces perpendiculaires entre elles s'étendant sur toute la hauteur du coeur, constituées par deux parties de plaques du cloisonnement perpendiculaires entre elles.

Dans le cas du chargement des assemblages de combustible suivant les diagonales suivantes 41 b, 41 c, les logements dans lesquels sont introduits les assemblages de combustible sont délimités sur deux faces perpendiculaires entre elles soit par deux parties de plaque de cloisonnement, soit par une partie de plaque de cloisonnement et une face d'assemblage de combustible, soit par deux faces latérales d'assemblages de combustible.

Le chargement est effectué dans un premier sens pour une première diagonale et dans le sens opposé pour la diagonale suivante, comme représenté par exemple par les flèches à l'extrémité des lignes 41 a, 41 b et 41 c.

Dans tous les cas, pendant le chargement du coeur 6 du réacteur nucléaire, chacun des logements dans lesquels on vient placer un assemblage de combustible 3 est fermé sur deux côtés par des faces de cloisonnement ou d'assemblages de combustible contenant des faces limitatives s'étendant de manière sensiblement continue suivant toute la hauteur du coeur et ouvert sur ses deux autres côtés, chacun des logements d'assemblage de combustible ayant bien entendu une forme analogue à la forme d'un assemblage de combustible, c'est-à-dire une forme prismatique droite à section carrée.

On va maintenant décrire les opérations de chargement d'un assemblage de combustible 3 dans un logement d'assemblage de combustible du coeur situé à la verticale de l'emplacement 40a représenté sur la figure 7, à l'intérieur d'une rangée d'emplacements 41 h disposés suivant une diagonale parallèle aux diagonales 41 a, 41 b et 41c.

La rangée diagonale 41 h a été remplie d'assemblages de combustible 3 jusqu'à l'emplacement 40a, le logement correspondant de l'assemblage de combustible 3 à charger étant délimité sur deux côtés par des faces d'assemblages de combustibles voisins du logement dans lequel on réalise le chargement de l'assemblage de combustible 3.

Lors d'opérations préalables au rechargement du coeur 6 du réacteur nucléaire, on a placé sur un stand de stockage dans le fond de la piscine 2 du réacteur, deux moyens de guidage 18 qui seront utilisés lors de chacune des opérations de chargement d'un assemblage de combustible tel que 3.

Avant de réaliser la dépose de l'assemblage de combustible, cet assemblage dé combustible 3 pouvant être fixé au mât de chargement 10 de la machine de chargement 5, on met en place deux moyens de guidage 18 dans des emplacements d'assemblages de combustible entourant l'emplacement 40a sur lequel on doit réaliser la dépose d'un assemblage de combustible 3, de manière à guider l'embout inférieur 9b de l'assemblage de combustible sur ses quatre faces latérales lors de la dépose de l'assemblage sur la plaque de support de coeur. Pour cela, on utilise la perche de manutention 16 des moyens de guidage dont le fonctionnement est indépendant du fonctionnement du mât de chargement d'assemblages de combustible.

En réalité, on verra par la suite qu'il suffit en général, à chaque étape de chargement d'un assemblage de combustible, de déplacer un seul moyen de guidage 18 d'un emplacement d'assemblage de combustible à un autre pour délimiter l'emplacement de chargement d'un assemblage de combustible au-dessus de la plaque de support de coeur 8.

La partie des moyens de guidage 18 en saillie au-dessus de la plaque de support de coeur 8 après introduction des pions 22 à l'intérieur des trous de passage d'eau de la plaque de support de coeur correspond à la hauteur de l'enveloppe 20, cette hauteur étant très faible par rapport à la hauteur totale du coeur. C'est ainsi que dans le cas d'un coeur de réacteur nucléaire refroidi par de l'eau sous pression constitué par des assemblages d'une hauteur de l'ordre de 4 à 5 mètres selon les réacteurs, la hauteur de l'enveloppe des moyens de guidage 18 est inférieure à 20 cm, c'est-à-dire inférieure à 5 % de la hauteur totale du coeur.

Après avoir mis en place les dispositifs de guidage 18 dans les deux positions requises autour de l'emplacement 40a, on positionne la machine de chargement, de manière que son axe vertical de déplacement de l'assemblage de combustible soit sensiblement décalé par rapport à l'axe vertical de l'emplacement 40a de l'assemblage de combustible sur la plaque supérieure du coeur, dans une direction horizontale parallèle à la plaque 8, à l'opposé des deux faces d'assemblages de combustible délimitant le logement de l'assemblage de combustible 3 à charger.

Le décalage de l'axe de déplacement vertical de la machine de chargement est d'environ 10 cm par rapport aux deux faces délimitant le logement de manière que, lors de la descente de l'assemblage de combustible dans le coeur du réacteur nucléaire, les deux faces de l'assemblage de combustible en cours de chargement se trouvent à une certaine distance en vis-à-vis des deux faces du logement constitué par des faces d'assemblages de combustible voisins, ce qui permet d'éviter tout choc ou tout frottement de l'assemblage de combustible.

Il est alors possible d'assurer la descente de l'assemblage de combustible 3 à une première vitesse rapide à l'intérieur de la cuve du réacteur nucléaire, par exemple à une vitesse de 15 mètres par minute.

On arrête la descente de l'assemblage de combustible à vitesse rapide, au plus tard lorsque l'embout inférieur 9b est parvenu à une distance verticale au-dessus de la plaque de support de coeur égale à 5 % de la hauteur du coeur, c'est-à-dire au niveau de la partie supérieure des moyens de guidage 18. On déplace alors l'assemblage de combustible dans une direction sensiblement horizontale, pour disposer son axe vertical suivant l'axe de sa position de chargement dans le coeur du réacteur nucléaire. On reprend alors la descente verticale de l'assemblage de combustible à une seconde vitesse inférieure à la première, ou vitesse lente, qui peut être par exemple de 1,2 mètre par minute.

Lorsque l'embout inférieur 9b de l'assemblage de combustible parvient dans la zone occupée par les moyens de guidage 18, légèrement au-dessus de la surface supérieure de la plaque de support de coeur 8, l'embout inférieur de l'assemblage de combustible peut entrer en contact avec les faces inclinées des moyens de guidage 18 dirigées vers le logement de l'assemblage de combustible en cours de chargement. Ces faces inclinées assurent un guidage du pied de l'assemblage de combustible, aussi bien dans la direction axiale verticale que dans deux directions horizontales respectivement perpendiculaires aux deux faces des assemblages voisins de l'assemblage 3 en cours de chargement et exercent des forces repoussant le pied de l'assemblage de combustible vers l'intérieur de l'emplacement 40a. L'embout inférieur est guidé, pendant cette phase, aussi bien par les moyens de guidage 18 que par les embouts d'assemblages adjacents (ou des parties du cloisonnement suivant la position de chargement).

L'embout inférieur de l'assemblage de combustible 3, pourvu que cet assemblage de combustible soit correctement orienté vient se placer sur l'emplacement 40a, de telle sorte que les ouvertures de l'embout s'engagent sur les pions de centrage et de positionnement correspondants de la plaque de support de coeur 8.

Le chargement d'un assemblage de combustible par le procédé selon l'invention est donc réalisé de manière rapide et avec une très grande sûreté d'exécution.

Il est à remarquer que le déplacement de l'assemblage de combustible dans la direction verticale, pour sa descente sur la plaque de support de coeur, n'est gêné par aucun élément adjacent du fait que ses faces dirigées vers les assemblages de combustible voisins sont éloignées d'une distance suffisante résultant du décalage des axes (par exemple 10 cm) et que les deux autres faces de l'assemblage de combustible sont disposées sur des côtés du logement qui ne sont pas fermés.

Une telle descente de l'assemblage de combustible avec un axe sensiblement décalé par rapport à la position de l'axe de son logement est appelée chargement en "grand décalé".

Le chargement de l'assemblage de combustible par rangées disposées suivant des diagonales du réseau carré, successivement dans un sens et dans l'autre, est appelé chargement "en serpent".

Après le chargement de l'assemblage de combustible 3 dans le logement à l'aplomb de l'emplacement 40a, on effectue le chargement d'un assemblage de combustible dans le logement voisin suivant la diagonale 41 h à l'aplomb de l'emplacement 40b sur la plaque supérieure de coeur 8.

Il est à remarquer que l'un des côtés de l'emplacement 40b est déjà bordé par un dispositif de guidage 18 et qu'il suffit de déplacer le second dispositif de guidage 18 utilisé précédemment.

Pour cela, on réalise, dans un premier temps, la remontée du mât 10 de chargement d'assemblages de combustible à l'intérieur du tube de la machine de chargement et on fait descendre et on déplace latéralement la perche de manutention 16 des moyens de guidage 18 de manière simultanée pour venir prendre en charge le moyen de guidage 18 à déplacer.

On soulève le moyen de guidage 18 pris en charge à une hauteur permettant son passage au-dessus du second moyen de guidage 18 laissé en place sur la plaque de support du coeur et on déplace le moyen de guidage 18 pris en charge jusqu'à sa nouvelle position adjacente à l'emplacement 40b. Les déplacements horizontaux d'un emplacement à un autre sont réalisés à l'aide de la machine de chargement. On réalise ensuite la dépose du moyen de guidage pris en charge sur l'emplacement libre voisin de l'emplacement 40b.

Après libération du moyen de guidage dans sa nouvelle position, on remonte la perche de manutention à l'intérieur du tube de guidage de la machine de manutention et on déplace la machine de chargement du combustible jusqu'à une zone de prise en charge d'un assemblage de combustible dont on assure ensuite la dépose dans le logement à l'aplomb de l'emplacement 40b de la manière qui a été décrite en ce qui concerne la dépose d'un assemblage de combustible 3 dans le logement à l'aplomb de l'emplacement 40a.

On poursuit les opérations de chargement suivant la ligne 41 h jusqu'à l'extrémité de la rangée puis on effectue le chargement de la rangée suivante, de direction diagonale, dans un sens opposé.

Dans certaines positions, à l'extrémité des rangées, il peut être nécessaire de déplacer les deux dispositifs de guidage pour assurer le chargement du premier ou du deuxième assemblage de combustible d'une rangée.

Le procédé suivant l'invention permet donc de réaliser rapidement et de manière très sûre le chargement complet du coeur d'un réacteur nucléaire, par des manoeuvres entraînant une indisponibilité minimale de la machine de chargement.

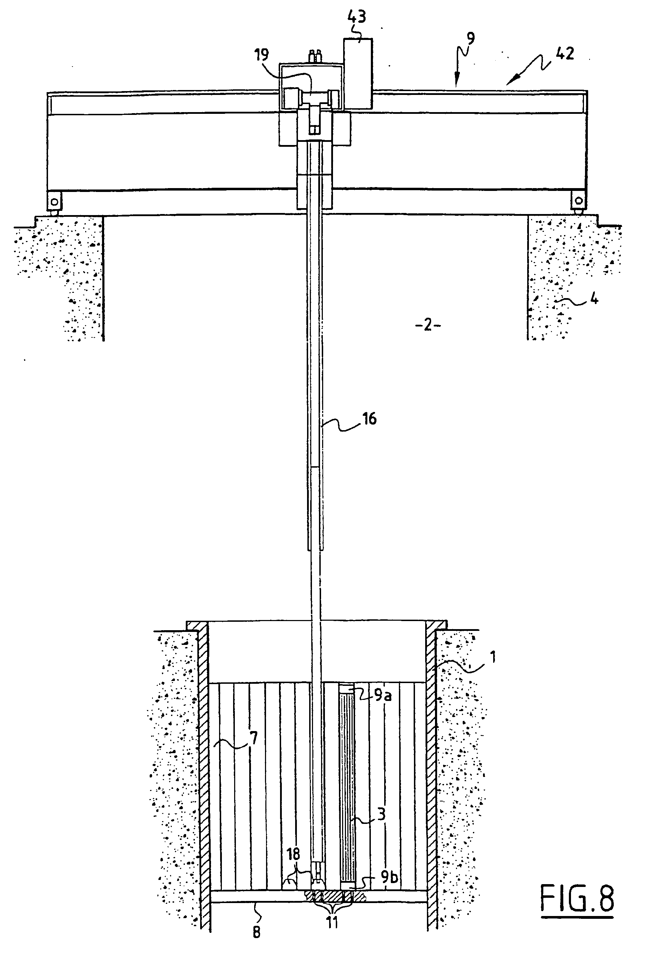

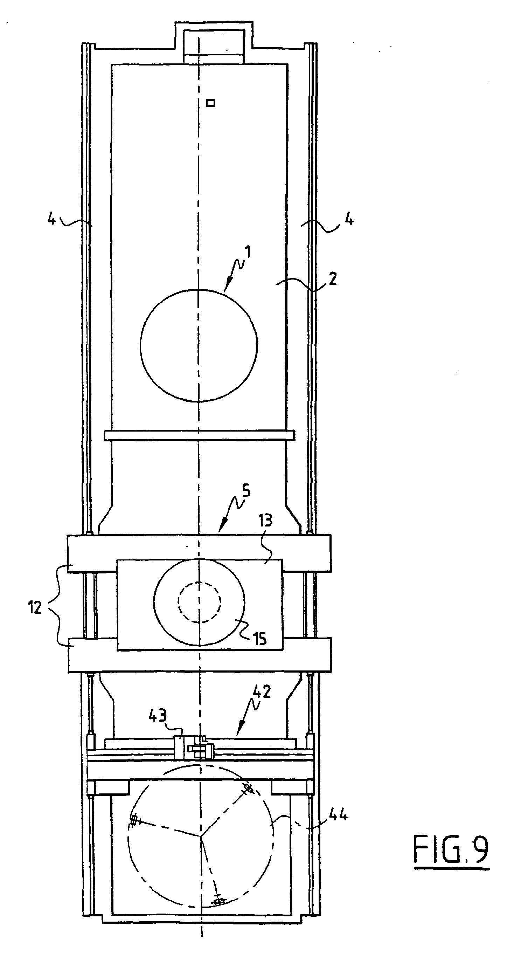

Sur les figures 8 et 9, on a représenté un second mode de réalisation du dispositif permettant de mettre en oeuvre le procédé suivant l'invention.

Les éléments correspondants sur la figure 1 relative au premier mode de réalisation et sur les figures 8 et 9 relatives au second mode de réalisation portent les mêmes repères.

Dans le cas du second mode de réalisation, la perche 16 de manutention des moyens de guidage 18 déplacée dans la direction verticale par le treuil 19 est portée par un chariot 43 qui se déplace sur un second pont roulant 42 monté lui-même mobile sur les mêmes rails que le premier pont roulant 12 de la machine de manutention 5 fixés sur les parties d'extrémité supérieure des parois 4 de la piscine 2.

De ce fait, les déplacements de la perche de manutention 16 des moyens de guidage 18 peuvent être réalisés indépendamment des déplacements de la machine de chargement 5, ce qui permet de mettre en place les moyens de guidage 18 des assemblages de combustible sur la plaque de support de coeur 8 du réacteur sans rendre indisponible la machine de chargement.

De ce fait, pendant les opérations de pose d'un moyen de guidage 18 (ou de deux moyens de guidage 18) préalablement au chargement d'un assemblage de combustible 3, on peut réaliser en temps masqué la prise en charge de l'assemblage de combustible par la machine de chargement. La réalisation des opérations de mise en place des moyens de guidage 18 en temps masqué pendant les déplacements de la machine de chargement, compte tenu des vitesses retenues pour réaliser les différents déplacements de la machine de chargement et du pont et du chariot de déplacement de la perche de manutention des moyens de guidage 18 permet d'accélérer le rechargement du coeur.

De plus, le pont de manutention et le chariot de déplacement de la perche de manutention des moyens de guidage peuvent être utilisés pour le déplacement et la mise en oeuvre de différents outillages et en particulier d'un outil de connexion et de déconnexion des tiges de commande des grappes de réglage de la réactivité dans le coeur du réacteur nucléaire. Dans ce cas, après le rechargement du coeur, on dépose les moyens de guidage 18 sur leur stand de stockage dans le fond de la piscine et on démonte la perche de manutention 16 des moyens de guidage pour la déposer sur un stand de stockage prévu dans la piscine du réacteur.

On monte sur le second pont roulant 42 et le chariot 43 l'outil de connexion et de déconnexion des tiges de commande des grappes du réacteur nucléaire.

Le stockage du second pont roulant 42 de la perche de manutention 16 est réalisé, comme représenté sur la figure 9, dans une zone de stockage située au voisinage du stand 44 de stockage des équipements internes supérieurs du réacteur nucléaire.

Dans tous les cas, le procédé et le dispositif suivant l'invention permettent de réaliser, de manière très rapide et très sûre, le chargement du coeur d'un réacteur nucléaire.

L'invention ne se limite pas strictement au mode de réalisation qui a été décrit.

C'est ainsi que les moyens de guidage de l'assemblage de combustible et la perche de manutention de ces moyens de guidage peuvent être réalisés sous une forme différente de celle qui a été décrite.

Le chargement du coeur du réacteur nucléaire peut également être réalisé suivant une séquence différente de celle qui a été décrite qui présente l'avantage de ne nécessiter qu'un nombre de déplacements minimal des moyens de guidage.

De manière générale, l'invention s'applique au chargement du coeur de tout réacteur nucléaire refroidi par de l'eau comportant des assemblages de combustible de forme prismatique à section carrée disposés de manière juxtaposée dans le coeur du réacteur nucléaire suivant un réseau à mailles carrée.

## Revendications

1. Procédé de chargement du coeur d'un réacteur nucléaire refroidi par de l'eau avec des assemblages de combustible (3) de forme prismatique droite à section carrée disposés avec leurs axes verticaux suivant toute la hauteur du coeur (6), juxtaposés suivant leurs faces latérales et comportant chacun un embout inférieur (9b) ayant quatre faces latérales, destiné à venir reposer sur une plaque de support de coeur (8) horizontale traversée par des ouvertures (11) de passage d'eau de refroidissement et comportant des moyens de positionnement d'un assemblage de combustible en regard de chacune d'un ensemble de positions d'assemblage de combustible (3) du coeur (6), le chargement étant réalisé, depuis le niveau supérieur d'une piscine (2) du réacteur dans laquelle débouche une partie supérieure d'une cuve (1) du réacteur nucléaire renfermant le coeur (6), ouverte et remplie d'eau, par déplacement dans la direction verticale et vers le bas au moyen d'une machine de chargement (5), de chacun des assemblages de combustible (3) du coeur (6) en position verticale, successivement, pour placer chaque assemblage de combustible dans une position d'assemblage à l'intérieur du coeur (6) ayant un axe vertical de positionnement de l'assemblage et délimitée par au moins une surface limitative s'étendant sensiblement sur toute la hauteur du coeur, **caractérisé par le fait :**
- **qu'**on met en place, avant le chargement d'un assemblage de combustible (3), dans au moins une position d'assemblage adjacente à la position de l'assemblage (3) dont on effectue le chargement, au moins un moyen de guidage (18) de l'embout inférieur (9b) de l'assemblage de combustible, de manière à guider l'embout inférieur (9b) suivant ses quatre faces latérales pour le déposer sur la plaque de support de coeur (8), le moyen de guidage (18) ayant une hauteur inférieure à 5 % de la hauteur du coeur, au-dessus de la plaque de support de coeur (8) et étant engagé dans des ouvertures (11) de passage d'eau pour son positionnement et son immobilisation,
- **qu'**on déplace l'assemblage de combustible dans la direction verticale et vers le bas à une première vitesse suivant un axe vertical décalé dans une direction parallèle à la plaque de support de coeur (8), par rapport à l'axe vertical de positionnement (40a, 40b) de l'assemblage de combustible dans le coeur (6), de manière à le maintenir éloigné de l'au moins une surface limitative pendant le déplacement,
- **qu'**on arrête le déplacement vertical à la première vitesse de l'assemblage de combustible (3) au plus tard lorsque l'embout inférieur (9b) de l'assemblage de combustible (3) est parvenu à une distance verticale de la plaque de support de coeur (8) égale à 5 % de la hauteur du coeur (6),
- **qu'**on déplace l'assemblage de combustible (3) sensiblement horizontalement pour placer son axe suivant l'axe de positionnement de l'assemblage dans le coeur (6) du réacteur nucléaire,
- **qu'**on déplace l'assemblage de combustible (3), dans la direction verticale et vers le bas, à une seconde vitesse inférieure à la première, pour le déposer sur la plaque de support de coeur (8), l'embout inférieur (9b) de l'assemblage de combustible (3) étant alors guidé sur ses quatre faces latérales.

2. Procédé suivant la revendication 1, dans le cas du chargement d'un coeur (6) de réacteur nucléaire dont les assemblages de combustible (3) reposent sur la plaque de support de coeur (8) en des emplacements (40) disposés suivant un réseau à mailles carrées, **caractérisé par le fait que** le chargement des assemblages de combustible (3) dans le coeur du réacteur nucléaire est réalisé suivant des lignes diagonales (41 a, 41 b, 41 c, 41 h) du réseau à mailles carrées des emplacements (40) de chargement de la plaque de support de coeur (8), chacun des assemblages de combustible (3) étant chargé de manière que son embout supérieur vienne en appui sur un emplacement (40a, 40b) disposé suivant une ligne diagonale à la suite de l'emplacement de chargement d'un assemblage précédent et qu'on déplace, suivant une ligne diagonale parallèle et voisine de la ligne diagonale suivant laquelle on réalise le chargement, l'au moins un moyen de guidage (18), entre deux opérations de chargement d'un assemblage de combustible (3).

3. Procédé suivant la revendication 2, **caractérisé par le fait qu'**on réalise le chargement suivant les lignes diagonales (41 a, 41b, 41c, 41h) parallèles entre elles, successivement, dans un sens puis dans l'autre.

4. Procédé suivant l'une quelconque des revendications 1 à 3, **caractérisé par le fait que** la première vitesse de déplacement vertical de l'assemblage de combustible suivant l'axe vertical décalé est de l'ordre de 15 m/minute.

5. Dispositif de chargement du coeur d'un réacteur nucléaire refroidi par de l'eau avec des assemblages de combustible (3) de forme prismatique droite à section carrée disposés avec leurs axes verticaux suivant toute la hauteur du coeur (6), juxtaposés suivant leurs faces latérales et comportant chacun un embout inférieur (9b) destiné à venir reposer sur une plaque de support de coeur (8) horizontale traversée par des ouvertures (11) de passage d'eau de refroidissement et comportant des moyens de positionnement d'un assemblage de combustible en regard de chacune d'un ensemble de positions d'assemblage de combustible (3) du coeur (6), le chargement étant réalisé, depuis le niveau supérieur d'une piscine (2) du réacteur dans laquelle débouche une partie supérieure d'une cuve (1) du réacteur nucléaire renfermant le coeur (6), ouverte et remplie d'eau, par déplacement dans la direction verticale et vers le bas au moyen d'une machine de chargement (5), de chacun des assemblages de combustible (3) du coeur (6) en position verticale, successivement, pour placer chaque assemblage combustible dans une position de chargement à l'intérieur du coeur (6) délimitée par au moins une surface limitative sensiblement continue sur toute la hauteur du coeur et comportant un axe de chargement vertical, **caractérisé par le fait qu'**il comporte :
- au moins un moyen de guidage (18) de l'embout inférieur (9b) d'un assemblage de combustible (3) comportant une enveloppe (20) au moins partiellement de forme pyramidale à base carrée, une plaque de support sur laquelle est fixée l'enveloppe de forme carrée ayant la dimension de la section transversale d'un assemblage de combustible (3) sur laquelle sont fixés en saillie, dans une direction opposée à l'enveloppe (20) de forme pyramidale, au moins deux pions de positionnement (22) dans une ouverture (11) de passage d'eau traversant la plaque de support de coeur (8) le moyen de guidage ayant une hauteur inférieure à 5% de la hauteur du coeur et une pièce de préhension et de levage (23) solidaire de l'enveloppe (20) dans une disposition opposée suivant l'axe de l'enveloppe pyramidale (20) à la plaque de base (21) ayant une ouverture de préhension (24), suivant l'axe de l'enveloppe pyramidale (20),
- une perche de manutention comportant des moyens manoeuvrables à distance de préhension d'un moyen de guidage (18) à l'aide de doigts de préhension d'un grappin, par l'intermédiaire de l'ouverture (24) de la pièce de préhension (23) du moyen de guidage (18),
- des moyens de déplacement (19) de la perche de manutention (16) dans la direction verticale,
- des moyens de déplacement (12, 13, 42, 43) de la perche de manutention dans un plan horizontal suivant deux directions perpendiculaires entre elles, disposés au-dessus du niveau de la piscine (2) et des moyens de commande à distance des doigts de manutention (35) du grappin de la perche de manutention pour la prise et le relâchement d'un moyen de guidage (18).

6. Dispositif suivant la revendication 5, **caractérisé par le fait que** la perche de manutention (16) des moyens de guidage (18) présente en partie haute des dimensions analogues à celles d'une perche de télévision de la machine de chargement, de manière à pouvoir être échangée avec la perche de télévision sur le site du réacteur nucléaire.

7. Dispositif suivant l'une quelconque des revendications 5 et 6, **caractérisé par le fait que** la perche de manutention (16) comporte un ensemble de préhension (30) ayant un support tubulaire (33) sur lequel sont montés pivotants des doigts de préhension (35) d'un grappin et dans lequel est montée coulissante une tige d'actionnement (32) d'un vérin de manoeuvre (28) du grappin de la perche de manutention solidaire, à l'une de ses extrémités, d'une olive (37a) d'actionnement des doigts (35) pour leur déplacement entre une position rapprochée et une position écartée de prise, par déplacement de la tige d'actionnement (32) du vérin dans la direction axiale.

8. Dispositif suivant l'une quelconque des revendications 5 à 7, **caractérisé par le fait que** les moyens de déplacement de la perche de manutention (16) des moyens de guidage (18) dans un plan horizontal suivant deux directions perpendiculaires entre elles sont constitués par un pont roulant (12) et un chariot (13) à déplacements croisés d'une machine de chargement (5) comportant un mât de chargement (10) d'assemblages de combustible (3), la perche de manutention (16) étant montée mobile dans la direction verticale à l'intérieur d'un tube de guidage (14) du mât de chargement (10) de la machine de chargement (5) et reliée à un treuil (19) de déplacement dans la direction verticale solidaire du chariot (13) de la machine de chargement (5).

9. Dispositif suivant l'une quelconque des revendications 5 à 7, **caractérisé par le fait que** les moyens de déplacement de la perche de manutention (16) dans un plan horizontal suivant deux directions perpendiculaires entre elles sont constitués par un second pont roulant (42) indépendant d'un premier pont roulant (12) d'une machine de chargement (5) du réacteur nucléaire mobile sur des rails de déplacement situés au-dessus du niveau supérieur de la piscine (2) du réacteur nucléaire et un chariot (43) indépendant de la machine de chargement (5), monté mobile sur la poutre du second pont roulant (42) dans une direction perpendiculaire à la direction de déplacement du second pont roulant (42).

## Claims

1. A process for charging the core of a water-cooled nuclear reactor with fuel assemblies (3) having the shape of a right prism of square cross-section which are arranged with their vertical axes along the entire height of the core (6), juxtaposed along their lateral faces, and which each include a lower end fitting (9b) having four lateral faces, said end fitting being intended to come to rest on a horizontal core support plate (8) traversed by openings (11) for passage of cooling water and including means for positioning a fuel assembly opposite each one of a set of positions for a fuel assembly (3) of the core, the charging being implemented from the upper level of a pool (2) of the reactor, into which an upper part of a tank (1) of the nuclear reactor containing the core (6) opens, said tank being open and filled with water, by displacement vertically downwards, by means of a charging machine (5), of each one of the fuel assemblies (3) of the core (6) in the vertical position, in succession, in order to place each fuel assembly in an assembly position within the core (6) having a vertical axis for positioning of the assembly and delimited by at least one limiting surface extending appreciably over the entire height of the core,
**characterised in that**:
- prior to the charging of a fuel assembly (3), in at least one assembly position adjacent to the position of the assembly (3) that is being charged at least one guide means (18) for the lower end fitting (9b) of the fuel assembly is placed in position in such a way as to guide the lower end fitting (9b) along its four lateral faces, in order to set it down on the core support plate (8), said guide means (18) having a height amounting to less than 5% of the height of the core above the core support plate (8) and being engaged in the openings (11) for passage of water for the positioning and immobilisation thereof,
- the fuel assembly is displaced vertically downwards at a first speed along a vertical axis which is offset in a direction parallel to the core support plate (8) in relation to the vertical axis (40a, 40b) for positioning the fuel assembly in the core (6) in such a way as to keep it away from the at least one limiting surface during the displacement,
- the vertical displacement of the fuel assembly (3) at the first speed is halted at the latest when the lower end fitting (9b) of the fuel assembly (3) has attained a vertical distance from the core support plate (8) equal to 5% of the height of the core (6),
- the fuel assembly (3) is displaced appreciably horizontally, in order to place its axis along the axis for positioning the assembly in the core (6) of the nuclear reactor,
- the fuel assembly (3) is displaced vertically downwards at a second speed, lower than the first, in order to set it down on the core support plate (8), the lower end fitting (9b) of the fuel assembly (3) then being guided on its four lateral faces.

2. Process according to Claim 1 in the case of the charging of a nuclear-reactor core (6), the fuel assemblies (3) of which rest on the core support plate (8) in locations (40) arranged along a square-meshed grid, **characterised in that** the charging of the fuel assemblies (3) in the core of the nuclear reactor is implemented along diagonal lines (41a, 41b, 41c, 41h) of the square-meshed grid of the charging locations (40) of the core support plate (8), each one of the fuel assemblies (3) being charged in such a way that its upper end fitting comes to bear against a location (40a, 40b) arranged along a diagonal line following the charging location of a preceding assembly, and **in that** at least one guide means (18) is displaced along a parallel diagonal line adjoining the diagonal line along which the charging is being implemented, between two operations for charging of a fuel assembly (3).

3. Process according to Claim 2, **characterised in that** the charging is implemented along diagonal lines (41a, 41b, 41c, 41h) parallel to one another, in succession, in one direction and then in the other.

4. Process according to any one of Claims 1 to 3, **characterised in that** the first speed of vertical displacement of the fuel assembly along the offset vertical axis is of the order of 15 m/minute.

5. A device for charging the core of a water-cooled nuclear reactor with fuel assemblies (3) having the shape of a right prism of square cross-section which are arranged with their vertical axes along the entire height of the core (6), juxtaposed along their lateral faces, and which each include a lower end fitting (9b) which is intended to come to rest on a horizontal core support plate (8) traversed by openings (11) for passage of cooling water and including means for positioning a fuel assembly opposite each one of a set of positions for a fuel assembly (3) of the core, the charging being implemented from the upper level of a pool (2) of the reactor, into which an upper part of a tank (1) of the nuclear reactor containing the core (6) opens, said tank being open and filled with water, by displacement vertically downwards, by means of a charging machine (5), of each one of the fuel assemblies (3) of the core (6) in the vertical position, in succession, in order to place each fuel assembly in a charging position within the core (6), which is delimited by at least one limiting surface which is appreciably continuous over the entire height of the core and which has a vertical charging axis, **characterised in that** said device includes:
- at least one guide means (18) for the lower end fitting (9b) of a fuel assembly (3) including an envelope (20) which is at least partially of pyramidal shape with a square base, a support plate on which is fixed the envelope of square shape having the dimension of the cross-section of a fuel assembly (3), on which are fixed, projecting in a direction opposed to the envelope (20) of pyramidal shape, at least two positioning pins (22) in an opening (11) for passage of water traversing the core support plate (8), the guide means having a height less than 5% of the height of the core, and a gripping and lifting part (23), integral with the envelope (20), in an opposed arrangement along the axis of the pyramidal envelope (20) to the base plate (21) having a gripping opening (24) along the axis of the pyramidal envelope (20),
- a handling boom including means capable of being operated remotely for gripping of a guide means (18) with the aid of gripping fingers of a grab through the agency of the opening (24) of the gripping part (23) of the guide means (18),
- means (19) for displacement of the handling boom (16) in the vertical direction,
- means (12, 13, 42, 43) for displacement of the handling boom in a horizontal plane along two mutually perpendicular directions, said means being arranged above the level of the pool (2), and means for remote control of the handling fingers (35) of the grab of the handling boom for holding and releasing a guide means (18).

6. Device according to Claim 5, **characterised in that** the handling boom (16) of the guide means (18) has dimensions in the top part that are analogous to those of a television boom of the charging machine in such a way as to be capable of being exchanged with the television boom on the site of the nuclear reactor.

7. Device according to either one of Claims 5 and 6, **characterised in that** the handling boom (16) includes a gripping unit (30) having a tubular support (33) on which gripping fingers (35) of a grab are mounted in pivoting manner and in which an actuating rod (32) is mounted in sliding manner for an operating jack (28) of the grab of the handling boom which is integral at one of its ends with a button (37a) for actuating the fingers (35) for their displacement between a close position and a remote holding position by displacement of the actuating rod (32) of the jack in the axial direction.

8. Device according to any one of Claims 5 to 7, **characterised in that** the means for displacement of the handling boom (16) of the guide means (18) in a horizontal plane along two mutually perpendicular directions are constituted by a rolling bridge (12) and a trolley (13) for crosswise displacements of a charging machine (5) including a charging mast (10) for fuel assemblies (3), said handling boom (16) being mounted in mobile manner in the vertical direction within a guide tube (14) of the charging mast (10) of the charging machine (5) and linked to a winch (19) for displacement in the vertical direction, which is integral with the trolley (13) of the charging machine (5).

9. Device according to any one of Claims 5 to 7, **characterised in that** the means for displacement of the handling boom (16) in a horizontal plane along two mutually perpendicular directions are constituted by a second rolling bridge (42), independent of a first rolling bridge (12), of a charging machine (5) of the nuclear reactor which is mobile on displacement rails situated above the upper level of the pool (2) of the nuclear reactor, and by a trolley (43), independent of the charging machine (5), which is mounted in mobile manner on the girder of the second rolling bridge (42) in a direction perpendicular to the direction of displacement of the second rolling bridge (42).

## Patentansprüche

1. Verfahren zum Beladen des Spaltraums eines wassergekühlten Kernreaktors mit Brennelementen (3) von gerader prismatischer Form mit quadratischem Querschnitt, die mit vertikal angeordneten Achsen der gesamten Höhe des Spaltraums (6) entsprechen, mit ihren Seitenflächen aneinandergrenzen und von denen jedes ein unteres Endstück (9b) mit vier Seitenflächen umfasst, das auf einer horizontalen Spaltraumträgerplatte (8) ruht, die von Öffnungen (11) für den Durchfluss von Kühlwasser durchquert wird und Brennelement-Positionierungseinrichtungen gegenüber jeder von einer Gruppe von Brennelementpositionen des Spaltraums (6) umfasst, wobei das Beladen von dem oberen bzw. höheren Niveau eines Beckens (2) des Kernreaktors aus erfolgt, in dem ein oberer Teil eines den Spaltraum (6) umschließenden offenen, mit Wasser gefüllten Behälters (1) des Kernreaktors mündet, indem jedes der Brennelemente (3) des Spaltraums (6) in vertikaler Position mit Hilfe einer Lademaschine (5) in vertikaler Richtung und nach unten verschoben wird, sukzessive, um jedes Brennelement im Innern des Spaltraums (6) in eine Brennelementposition bzw. Brennelement-Ladeposition zu bringen, die eine vertikale Brennelement-Positionierungsachse aufweist und abgegrenzt wird durch wenigstens eine Grenzfläche, die sich im Wesentlichen über die gesamte Höhe des Spaltraums erstreckt,
**dadurch gekennzeichnet, dass**:
- man vor dem Laden eines Brennelements (3) in wenigstens einer Brennelementposition, die an die Position des Brennelements angrenzt, das geladen wird, wenigstens eine Führungseinrichtung (18) des unteren Endstücks (9b) des Brennelements anbringt, um das untere Endstück (9b) an seinen vier Seitenflächen zu führen, wenn es auf die Spaltraumträgerplatte (8) gestellt wird, wobei die Führungseinrichtung (18) eine Höhe über der Trägerplatte (8) von weniger als 5 % der Höhe des Spaltraums aufweist und in Kühlwasserdurchflussöffnungen (11) sitzt, zu seiner Positionierung und seiner Immobilisierung;
- man das Brennelement in der vertikalen Richtung und nach unten mit einer ersten Geschwindigkeit gemäß einer vertikalen Achse verschiebt, die in Bezug auf die vertikale Positionierungsachse (40a, 40b) des Brennelements in dem Spaltraum (6) in einer zu der Spaltraumträgerplatte (8) parallelen Richtung versetzt ist, um es während der Verschiebung von wenigstens einer Grenzfläche fern zu halten,
- man die vertikale Verschiebung mit der ersten Geschwindigkeit des Brennelements (3) spätestens dann stoppt, wenn das untere Endstück (9b) des Brennelements (3) sich der Spaltraumträgerplatte (8) bis auf einen Abstand von gleich 5 % der Höhe des Spaltraums (6) genähert hat,
- man das Brennelement (3) im Wesentlichen horizontal verschiebt, um seine Achse gemäß der Positionierungsachse des Brennelements in dem Spaltraum (6) des Kernreaktors anzuordnen,
- man das Brennelement (3) mit einer zweiten Geschwindigkeit, die kleiner ist als die erste, in einer vertikalen Richtung und nach unten verschiebt, um es auf die Spaltraumträgerplatte (8) zu stellen, wobei das untere Endstück (9b) des Brennelements (3) dann an seinen vier Seitenflächen geführt wird.

2. Verfahren nach Anspruch 1 für den Fall des Beladens eines Kernreaktor-Spaltraums (8), dessen Brennelemente (3) auf der Spaltraumträgerplatte (8) auf Stellplätzen (40) ruhen, die entsprechend den quadratischen Maschen eines Gitters angeordnet sind, **dadurch gekennzeichnet, dass** das Beladen des Kemreaktorspaltraums mit Brennelementen gemäß diagonalen Linien (41 a, 41 b, 41 c, 41 h) des Quadratmaschengitters der Ladestellplätze (40) der Spaltraumträgerplatte (8) erfolgt, wobei jedes der Brennelemente (3) so geladen wird, dass sein unteres Endstück auf einem Stellplatz (40a, 40b) steht, der in der Folge des Beladens des vorhergehenden Brennelements (3) gemäß einer in Bezug auf dessen Stellplatz diagonalen Linie angeordnet ist, und dass man zwischen zwei Brennelement-Ladeoperationen wenigstens eine Führungseinrichtung (18) entsprechend einer diagonalen Linie verschiebt, die parallel und benachbart zu der diagonalen Linie ist, gemäß der man das Beladen ausführt.

3. Verfahren nach Anspruch 2, **dadurch gekennzeichnet, dass** man das Beladen entsprechend den zueinander parallelen diagonalen Linien (41a, 41b, 41c, 41h) ausführt, sukzessive in einer Richtung, dann in der anderen.

4. Verfahren nach einem der Ansprüche 1 bis 3, **dadurch gekennzeichnet, dass** die erste vertikale Verschiebungsgeschwindigkeit des Brennelements gemäß der vertikalen Achse ungefähr 15 m/min beträgt.

5. Vorrichtung zum Beladen des Spaltraums eines wassergekühlten Kernreaktors mit Brennelementen (3) von gerader prismatischer Form mit quadratischem Querschnitt, die mit vertikal angeordneten Achsen der gesamten Höhe des Spaltraums (6) entsprechen, mit ihren Seitenflächen aneinandergrenzen und von denen jedes ein unteres Endstück (9b) mit vier Seitenflächen umfasst, das auf einer horizontalen Spaltraumträgerplatte (8) ruht, die von Öffnungen (11) für den Durchfluss von Kühlwasser durchquert wird und Brennelement-Positionierungseinrichtungen gegenüber jeder von einer Gruppe von Brennelementpositionen des Spaltraums (6) umfasst, wobei das Beladen von dem oberen bzw. höheren Niveau eines Beckens (2) des Kernreaktors aus erfolgt, in dem ein oberer Teil eines den Spaltraum (6) umschließenden offenen, mit Wasser gefüllten Behälters (1) des Kernreaktors mündet, indem jedes der Brennelemente (3) des Spaltraums (6) in vertikaler Position mit Hilfe einer Lademaschine (5) in vertikaler Richtung und nach unten verschoben wird, sukzessive, um jedes Brennelement im Innern des Spaltraums (6) in eine Brennelement-Ladeposition zu bringen, die abgegrenzt wird durch wenigstens eine über die gesamte Höhe des Spaltraums im Wesentlichen durchgehende Grenzfläche und eine vertikale Ladeachse aufweist,
**dadurch gekennzeichnet, dass** sie umfasst:
- wenigstens eine Führungseinrichtung (18) des unteren Endstücks (9b) eines Brennelements (3) mit einer Hülle (20) von wenigstens partiell pyramidaler Form mit quadratischer Basis und einer quadratischen Trägerplatte mit den Abmessungen des Querschnitts eines Brennelements (3), an der in einer zu der Hülle (20) von pyramidaler Form entgegengesetzten Richtung wenigstens zwei herausragende Zapfen (22) befestigt sind, zur Positionierung in einer Durchflussöffnung (11) des die Spaltraumträgerplatte (8) durchquerenden Kühlwassers, und mit einem fest mit der Hülle (20) verbundenen Greif- und Hebestück (23) in einer entsprechend der Achse der pyramidalen Hülle zur der Basisplatte (21) entgegengesetzten Anordnung, das auf der Achse der pyramidalen Hülle (20) eine Greiföffnung (24) enthält - wobei diese Führungseinrichtung eine Höhe von weniger als 5 % der Höhe des Spaltraums aufweist,
- eine Handhabungsstange mit fernbedienbaren Einrichtungen zum Ergreifen einer Führungseinrichtung (18) mit Hilfe der Finger (35) eines Greifers und der Öffnung (24) des Greifstücks (23) der Führungseinrichtung (18),
- Verschiebungseinrichtungen (19) der Handhabungsstange (16) in der vertikalen Richtung,
- Verschiebungseinrichtungen (12, 13, 42, 43) der Handhabungsstange in einer horizontalen Ebene in zwei zueinander rechtwinkligen Richtungen, angeordnet über dem Niveau des Beckens (2), und Femsteuerungseinrichtungen der Greiffinger (35) des Greifers der Handhabungsstange, um eine Führungseinrichtung (18) zu ergreifen oder loszulassen.

6. Vorrichtung nach Anspruch 5, **dadurch gekennzeichnet, dass** die Handhabungsstange (16) der Führungseinrichtungen (18) im oberen Teil Dimensionen analog denen einer Televisionsstange der Lademaschine aufweist, so dass sie am Standort des Kernreaktors gegen die Televisionsstange ausgetauscht werden kann.

7. Vorrichtung nach einem der Ansprüche 5 und 6, **dadurch gekennzeichnet, dass** die Handhabungsstange (16) ein Greifsystem (30) umfasst, mit einem rohrförmigen Träger (33), an dem die Greiffinger (35) eines Greifers schwenkbar befestigt sind und in dem eine Betätigungsstange (32) eines Betätigungszylinders (28) des Greifers der Handhabungsstange verschiebbar ist, die an einem ihrer Enden eine Olive (37a) zum Betätigen der Finger (35) umfasst, um diese zwischen einer geschlossenen Ruhestellung und einer geöffneten Greifstellung zu bewegen, durch Verschiebung der Betätigungsstange (32) des Zylinders in axialer Richtung.

8. Vorrichtung nach einem der Ansprüche 5 bis 7, **dadurch gekennzeichnet, dass** die Verschiebungseinrichtungen der Handhabungsstange (16) der Führungseinrichtungen (18) in einer horizontalen Ebene entsprechend zwei zueinander rechtwinkligen Richtungen durch eine Rollbrücke (12) und einen Kreuzschlitten (13) einer Lademaschine (5) gebildet werden, die einen Lademast (10) für Brennelemente (3) umfasst, wobei die Handhabungsstange (16) beweglich in vertikaler Richtung ins Innere des Führungsrohrs (14) des Lademasts (10) der Lademaschine (5) eingebaut und mit einer Winde (19) zur Verschiebung in vertikaler Richtung verbunden ist, die fest mit dem Schlitten (13) der Lademaschine (5) verbunden ist.

9. Vorrichtung nach einem der Ansprüche 5 bis 7, **dadurch gekennzeichnet, dass** die Verschiebungseinrichtungen der Handhabungsstange (16) in einer horizontalen Ebene entsprechend zwei zueinander rechwinkligen Richtungen gebildet werden durch eine zweite Rollbrücke (42), unabhängig von einer ersten Rollbrücke (12) einer Lademaschine (5) des Kernreaktors, die auf Schienen verschiebbar ist, die sich über dem oberen Niveau des Beckens (2) des Kernreaktors befinden, und durch einen Schlitten (43), unabhängig von der Lademaschine (5), der beweglich auf den Träger der zweiten Rollbrücke (42) montiert ist, in einer zu der Verschiebungsrichtung der zweiten Rollbrücke (42) rechtwinkligen Richtung.
